# EUROPÄISCHE PATENTANMELDUNG

(11) **EP 1 343 062 A2**
(43) Veröffentlichungstag der Anmeldung: **10.09.2003**
(21) Anmeldenummer: 03001929.3
(22) Anmeldetag: 30.01.2003
(51) Int. Cl.: G05B 19/042

(54) **Verfahren zum Anzeigen von Fehlermeldungen in Softwareanwendungen**

(30) Priorität: 07.03.2002 DE 10210145
(71) Anmelder: Phoenix Contact GmbH & Co. KG, 32825 Blomberg (DE)
(72) Erfinder: Deuter, Andreas, Dipl.-Ing., 32825 Blomberg (DE)

(57) **Zusammenfassung**

Um Status- und Fehlermeldungen in Softwareanwendungen so anzuzeigen, daß der Programmablauf benutzter Anwendungen nicht unterbrochen wird, sieht die Erfindung ein Verfahren zum Anzeigen von Fehlermeldungen in einer Softwareanwendung vor, zu der eine Statuszeile erzeugt wird, wobei bei einem Fehler, der während des Ablaufs der Softwarenwendung auftritt, eine Fehlermeldung in der Statuszeile auf einer grafischen Benutzeroberfläche eingeblendet wird und wobei die Softwareanwendung weiterläuft.

## Beschreibung

Die Erfindung betrifft ein Verfahren zum Anzeigen von Fehlermeldungen in Softwareanwendungen, insbesondere ein Verfahren zum Anzeigen von Fehlermeldungen welches eine Unterbrechung des Programmablaufs vermeidet.

In heutigen Softwareanwendungen werden hauptsächlich MessageBoxen verwendet, um den Anwender eines Programms über Fehler- und Statusmeldungen zu informieren.

Durch die bekannten MessageBoxen wird der Anwendungsablauf jedoch in einer vom Anwender als störend empfundenen Weise unterbrochen. Dies tritt insbesondere dann auf, wenn der Programmablauf solange gestoppt wird, bis der Anwender eine aufgrund eines Fehlers oder einer Statusmeldung erscheinende MessageBox weggeklickt hat. Wenn der Anwender ein laufendes Programm nicht ständig am Bildschirm überwacht, wird durch eine solche erscheinende MessageBox der selbständige Programmablauf unterbunden.

Ist auf der anderen Seite ein Fehler aufgetreten oder eine Statusmeldung aufgetaucht, die für den Anwender besondere Wichtigkeit besitzen, oder welche für die vom Programm ausgegeben Daten relevant sind, so ist in der bisher bekannten Weise der Ausgabe von Fehlermeldungen mittels MessageBoxen die Information nach dem Wegklicken die Information verloren. Der Anwender hat so keine Möglichkeit mehr, die von der MessageBox bereitgestellte Information nochmals, etwa nach Beendigung des Programms und/oder nach Ausgabe der verarbeiteten Daten nachzulesen.

Ist andererseits ein Fehler, den der Anwender gemacht hat, diesem bereits bekannt, wie etwa bei einer fehlerhaften Eingabe in ein Dialogfenster, so wird der Anwender durch die Anzeige einer solchen MessageBox unnötig gestört.

In Anwendungen, welche sich in andere Anwendungen integrieren, sind derartige MessageBoxen zudem völlig ungeeignet. Bei solchen Programmen handelt es sich beispielsweise um ActiveX-Anwendungen, bei denen sich ActiveX-Controls in einen ActiveX-Container integrieren. Hier sind solche MessageBoxen ungeeignet, da oft mehrere integrierbare Anwendungen desselben Typs in einem Container laufen. Der Anwender hat somit bei einer in einer MessageBox erscheinenden Ausgabe keine Möglichkeit, zu erkennen, zu welcher Anwendung die Meldung zuzuordnen ist.

Außerdem sind Statuszeilen bekannt, in denen Statusmeldungen ausgegeben werden. Solche Statuszeilen finden sich häufig im unteren Teil eines Fensters einer graphischen Anwenderschnittstelle. Eine Statusmeldung in einer solchen Statuszeile besitzt jedoch den Nachteil, daß die Ausführlichkeit der Meldung durch die vorgegebene Länge der Statuszeile begrenzt ist. Bei einer solchen Statuszeile gemäß dem Stand der Technik ist außerdem nachteilig, daß sich vorangegangene Statusmeldungen nicht abfragen lassen.

Aus bekannten Softwareanwendungen sind ferner Hilfesysteme oder Hilfeprogramme bekannt, welche dem Anwender Hilfestellung zur korrekten Bedienung des Programms anbieten. Solche Hilfesysteme werden häufig über eine Taste oder Tastenkombination, wie etwa die Funktionstaste F1, über einen Menüpunkt oder einen mit dem Mauszeiger zu betätigenden Knopf auf der graphischen Oberfläche aufgerufen. Ebenso wird vielmals kontextsensitive Hilfe vom Hilfesystem angeboten. Diese Hilfesysteme geben jedoch keine Auskunft zu Inhalten in MessageBoxen. Für einen Anwender ist der Grund für das Auftreten eines Fehlers während des Programmablaufs daher oft nicht nachzuvollziehen. Infolgedessen wird auch die zukünftige Vermeidung eines Fehlers erschwert oder sogar verhindert.

Es ist daher die Aufgabe der vorliegenden Erfindung, die oben genannten Nachteile bei der Ausführung von Softwareanwendungen zu verhindern. Diese Aufgabe wird mittels des erfindungsgemäßen Verfahrens in einer Weise gelöst, die den vollständigen Verzicht auf den Einsatz von MessageBoxen erlaubt.

Diese Aufgabe wird bereits in überraschend einfacher Weise durch ein Verfahren zum Anzeigen von Status- und Fehlermeldungen in Softwareanwendungen gemäß Anspruch 1 gelöst.
Demgemäß ist ein Verfahren zum Anzeigen von Fehlermeldungen in Softwareanwendungen vorgesehen, zu der eine Statuszeile erzeugt wird, wobei bei einem Fehler, der während des Ablaufs der Softwarenwendung auftritt, eine Fehlermeldung in der Statuszeile auf einer grafischen Benutzeroberfläche eingeblendet wird und wobei die Softwareanwendung weiterläuft.

Das erfindungsgemäße Verfahren erlaubt es so, Fehlermeldungen in übersichtlicher Weise in der Statuszeile der Benutzeroberfläche darzustellen, so daß der Benutzer über das aufgetretene Problem informiert ist. Andererseits läuft die Softwareanwendung weiter, ohne daß eine MessageBox weggeklickt werden müßte. Dieses Verfahren des Handhabens von Fehlermeldungen ist insbesondere dort von Vorteil, wo es sich um Anwendungen handelt, welche automatisch ohne Benutzerinteraktion ablaufen.

Das erfindungsgemäße Verfahren zur Anzeige von Fehlermeldungen ist von besonderem Nutzen als Implementation in Softwareanwendungen zur Steuerung und/oder Überwachung automatischer Fertigungsprozesse, insbesondere in industriellen Anwendungen. Derartige Softwareanwendungen sollen in der Regel nach Initialisierung oder Parametereingaben ohne weitere Benutzerinteraktion selbständig weiterlaufen. Eine Anzeige einer MessageBox begleitet von einer Programmunterbrechung kann hierbei fatale Folgen haben, wenn dadurch etwa der Produktionsprozeß stoppt. Beispielsweise kann das Verfahren in einer speicherprogrammierbaren Steuerung (SPS), die eine entsprechende Benutzerschnittstelle, beziehungsweise eine graphische Benutzeroberfläche zur Verfügung stellt, durchgeführt werden.

Eine vorteilhafte Anwendung der Erfindung ergibt sich hierbei unter anderem für eine speicherprogrammierbare Steuerung für einen Feldbus und/oder die daran angeschlossenen Komponenten. Auch eine Diagnoseeinrichtung für eine.solche Steuerung mit entsprechender Softwareanwendung kann vorteilhaft das erfindungsgemäße Verfahren verwenden. Eine Wartezeit oder Unterbrechung im Programm der SPS aufgrund einer MessageBox zur Meldung eines für den Prozeßablauf nicht entscheidenden Fehlers kann zu kostenintensiven Systemausfällen führen. Ebenso würde ein Stopp der Diagnosefunktionen der Diagnoseeinrichtung die Überwachung des Prozeßablaufs unterbrechen, so daß das erfindungsgemäße Verfahren, welches eine solche Unterbrechung vermeidet, in diesen Fällen von besonderem Nutzen ist.

Das Verfahren läßt sich in eleganter Weise in Softwareanwendungen in der Form einer Funktion in die Anwendung integrieren. Die Funktion kann dabei zur Ausgabe der Fehlermeldung diese an zumindest eine andere Funktion der Softwareanwendung übergeben. Beispielsweise kann diese zumindest eine andere Funktion die Ausgabe der Meldungen in der Statuszeile der graphischen Benutzeroberfläche steuern.

Bevorzugt wird bei Auftreten eines Fehlers eine Fehlermeldung derart erzeugt, daß eine zuvor in der Statuszeile angezeigte Statusmeldung von dieser Fehlermeldung überschrieben wird.

Mit Vorteil kann das erfindungsgemäße Verfahren insbesondere in Anwendungen implementiert werden, die auf einem 32-Bit Microsoft®-Betriebssystem, wie etwa Windows95®, Windows 98®, Windows 2000® oder Windows NT® betrieben werden, bei welchen sonst standardmäßig MessageBoxen zur Anzeige von Fehlermeldungen verwendet werden.

Es ist ein Vorteil der vorliegenden Erfindung, daß der Programmablauf nicht durch das Erscheinen von MessageBoxen gestört wird, welche erst inaktiviert werden müssen, damit der Programmablauf fortgesetzt wird. Um das Anzeigen weiterer Status- und Fehlermeldungen zu ermöglichen, kann das Verfahren vorteilhaft so ausgestaltet sein, daß die Fehlermeldung in der Statuszeile bis zu dem Zeitpunkt angezeigt wird, an welchem eine weitere Status- oder Fehlermeldung generiert wird.

Um den Informationsfluß für den Anwender nicht zu unterbrechen, beziehungsweise, um das Anzeigen weiterer, für den Anwender möglicherweise wichtigen Informationen zu ermöglichen, kann die Fehlermeldung in der Statuszeile zweckmäßig durch den Text einer nachfolgenden Status- oder Fehlermeldung ersetzt werden. Dadurch kann die Statuszeile wieder zum Anzeigen des Programmstatus benutzt werden und die Statusmeldungen werden nicht durch die Fehlermeldungen blockiert.

In besonders vorteilhafter Weise kann das erfindungsgemäße Verfahren zum Anzeigen von Status- und Fehlermeldungen in Softwareanwendungen außerdem an die Bedürfnisse von erfahrenen und unerfahrenen Softwareahwendern gleichermaßen zugeschnitten werden. Ein erfahrener Benutzer kann aufgrund des begrenzten Textes in der Statuszeile.; bzw. dem Textfeld den Fehler bereits analysieren und, falls notwendig, beheben. Einem unerfahrenen Anwender kann über den Aufruf eines Hilfesystems außerdem die Möglichkeit geschaffen werden, detaillierte Ursachen und Abhilfen zu einem Fehler zu erfahren. Dazu ist in einer Ausführungsform des Verfahrens vorgesehen, daß über den Aufruf eines Hilfe- und/oder Informationsprogramms der Softwareanwendung Informationen über die Fehlermeldung zur Verfügung gestellt werden.

In nützlicher Weise kann auch das Textfeld, in welchem die Status- und Fehlermeldungen angezeigt werden, einer oder mehreren Schaltflächen zugeordnet sein, mit denen das Hilfeund/oder Informationsprogramm der Softwareanwendung aufgerufen werden kann. Die Erfindung sieht auf diese Weise eine kombinierte Verwendung von Statuszeile und Hilfesystem in einer Softwareanwendung vor. Beim normalen Ablauf des Programms wird in der Statuszeile eines oder mehrerer Fenster der graphischen Benutzeroberfläche der Status des Programms, bzw. der Status von Prozessen, welche momentan abgearbeitet werden, angezeigt.

Das Verfahren kann auch so ausgestaltet sein, daß die Fehlermeldung in der Statuszeile nach einer festgelegten Zeitdauer mit der aktuellen Statusmeldung überschrieben wird.

Der Fehlertext kann vorteilhaft in der Anzahl der Zeichen begrenzt sein, um die begrenzte Zeilenlänge der Statuszeile auszunutzen.

Weiterhin kann der Fehlertext automatisch, etwa durch eine geeignete Softwareroutine gekürzt werden, wenn der Wortlaut länger als die Zeilenlänge der Statuszeile ist.

Nach der begrenzten Zeit der Fehleranzeige wird wieder der normale Programmstatus angezeigt. Die Fehlermeldung wird dabei weiterhin als Textfeld angezeigt. Das Textfeld ist bevorzugt einem Knopf, beziehungsweise einer Schaltfläche zugeordnet, welche auf der Benutzeroberfläche plaziert ist. Beim Klick auf die Schaltfläche kann, beispielsweise durch Betätigen der Schaltfläche das Hilfe- und/oder Informationsprogramm der Anwendung gestartet und kontextsensitive Hilfe zum aufgetretenen Fehler angeboten werden. Auch können mehrere Schaltflächen für das Aufrufen von Hilfefunktionen vorgesehen sein, etwa eine Schaltfläche zum Aufrufen kontextsensitiver Information zu Statusmeldungen und eine weitere Schaltfläche für das Starten eines Hilfesystems, welches Hilfestellung zu Fehlermeldungen und/oder zur Behebung aufgetretener Fehler leistet.

Um die Fehlerinformation für die Benutzer weiter verfügbar zu halten, kann die Fehlermeldung auch in einem weiteren Feld angezeigt werden. Insbesondere ist dabei vorteilhaft, wenn dieses Feld auch nach dem Überschreiben der Fehlermeldung in der Statuszeile erhalten und die Information somit für den Benutzer erhalten bleibt. Das Fenster kann dazu ein separates Textfeld sein. Auch kann der Fehlertext weiter als ToolTip-Text, beispielsweise zu einer Informationsschaltfläche, zur Verfügung stehen. Beispielsweise kann auch der Informationsschaltfläche das Informations- und Hilfesystem zugeordnet sein, wobei kontextsensitive Hilfe und/oder Information zur der als Text in der Statuszeile und/oder als ToolTip-Text angezeigten Fehlermeldung geboten wird.

Das Verfahren ermöglicht einer Softwareanwendung trotz auftretender Fehler, weiterzulaufen, ohne daß ein Benutzereingriff notwendig ist. Der Benutzer muß daher auch die Softwareanwendung nicht ständig überwachen. Um sich später jedoch über die aufgetretenen Fehler informieren zu können, ist es sinnvoll, wenn die Fehlermeldungen in einer Datei, wie etwa einer Error-Log-Datei abgespeichert werden können.

Das erfindungsgemäße Verfahren läßt sich auch in eine Softwarekomponente integrieren, die in eine übergeordneten Softwareanwendung eingebunden ist. Bevorzugt wird dabei der Datenaustausch und damit auch die Übergabe der Fehlermeldung über eine Softwareschnittstelle vorgenommen. Geeignet hierfür ist beispielsweise eine Implementation in eine oder mehrere ActiveX-Komponenten, die in eine übergeordnete Anwendung eingebunden sind und mit dieser über die standardisierte ActiveX-Softwareschnittstelle kommunizieren.

Die Erfindung wird nachfolgend anhand einer Ausführungsform in Verbindung mit den beiliegenden Zeichnungen beispielhaft erläutert. Es zeigen:

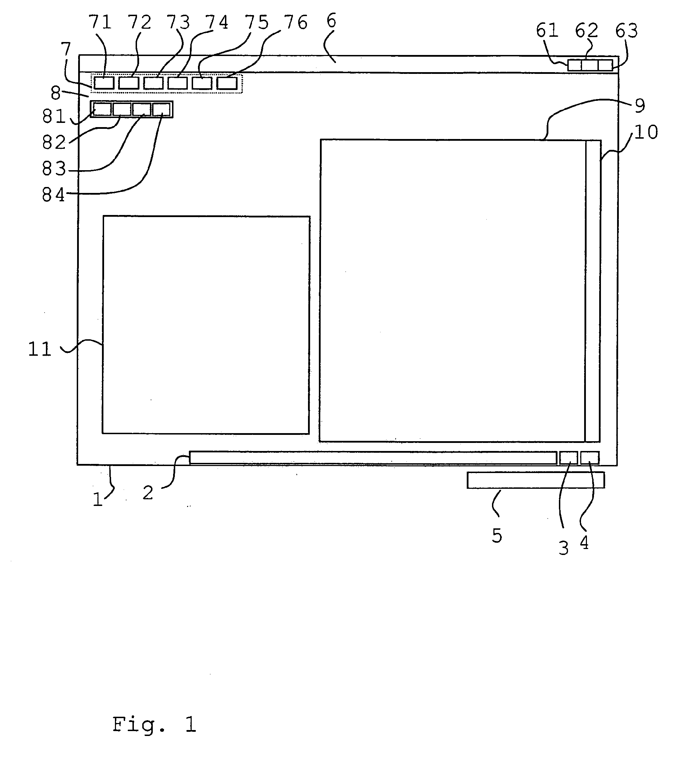

- Fig. 1: eine schematische Ansicht eines Fensters einer graphischen Benutzeroberfläche, welche Elemente zur Realisierung des erfindungsgemäßen Verfahrens zum Anzeigen von Status- und Fehlermeldungen in Softwareanwendungen aufweist.

In Fig. 1 ist ein Fenster einer graphischen Benutzeroberfläche abgebildet, welches typische Anzeige-Bedienungselemente für die Abarbeitung eines Anwendungsprogramms, sowie zusätzliche Anzeige- und Bedienungselemente für die Funktionen der vorliegenden Erfindung aufweist. Die in Fig. 1 gezeigte Benutzeroberfläche kann etwa die Benutzerschnittstelle zu einer Softwareanwendung sein, welche auf einer Plattform mit einem Microsoft®-Betriebssystem läuft. Im allgemeinen weist ein Fenster 1 Schaltflächen 61, 62, 63 auf, welche zum Minimieren, Maximieren und Schließen des Fensters 1 verwendet werden. Diese Schaltflächen sind bei üblichen Benutzeroberflächen im allgemeinen auf der rechten Seite der Titelzeile 6, in welcher der Titel des Programms oder das dem Fenster 1 zugeordneten Unterprogramms angeordnet. Unterhalb der Titelzeile 6 befinden sich in der Regel eine Menüleiste 7 mit Menüpunkten 71, 72,.., 76. Die Menüs sind zumeist noch in Untermenüs untergliedert, welche sich durch Anklicken des jeweiligen Hauptmenüpunktes aktivieren lassen. Unter einem der Menüpunkte 71, 72,.., 76 läßt sich das Hilfesystem des Anwenderprogramms aufrufen.

Unterhalb der Menüleiste 7 befinden sich häufig eine Symbolleisten, welche in Fig. 1 durch eine einzelne Symbolleiste 8 dargestellt sind. Die Symbolleiste 8 weist in der Regel mehrere Schaltflächen 81 - 84 auf, welche mit Symbolen versehen sind, wobei die Symbole oder Icons die jeweiligen durch die Betätigung der Schaltflächen 81 - 84 aufgerufenen Funktionen symbolisieren. Die verarbeiteten und/oder eingegebenen Daten werden häufig mittels Ein- und Ausgabefenstern 9 dargestellt, welche auch Scrollbalken 10 aufweisen können. Auf dem Fenster können sich außerdem noch ein oder mehrere Dialogfenster 11 befinden, um Einstellungen für die Abwicklung des Programms vorzunehmen.

In der Regel befindet sich am unteren Rand des Fensters 1 eine Statuszeile 2, in welcher aktuelle Statusmeldungen angezeigt werden, wie beispielsweise etwa die Meldung, daß eine Datei vollständig von der Festplatte gelesen oder auf die Festplatte gespeichert wurde.

Im Falle eines Fehlers, so etwa, wenn die zu lesende Datei fehlerhaft ist, wird beim Programmablauf von Anwendungen nach dem Stand der Technik eine MessageBox erscheinen, welche den Benutzer über den Fehler informiert. Dies,e MessageBox weist eine Schaltfläche auf, so daß durch Betätigen der Schaltfläche die MessageBox verschwindet und die Anwendung daraufhin fortgesetzt wird. Die beispielhaft in Fig. 1 gezeigte Oberfläche kann so beispielsweise eine Benutzerschnittstelle zu einer Softwareanwendung zur Steuerung und/oder Überwachung industrieller Fertigungsprozesse sein.

Im erfindungsgemäßen Verfahren wird die Fehlermeldung jedoch nicht in einer solchen MessageBox angezeigt, sondern erscheint vorzugsweise in der Statuszeile 2 der Softwareanwendung.

Die in der Statuszeile 2 eingeblendete Fehlermeldung wird gemäß dieser Ausführungsform der Erfindung entsprechend gekürzt, falls sie länger als die Zeichenlänge der Statuszeile ist. Nach einer festgelegten Zeitdauer, oder falls eine neue in der Statuszeile anzuzeigende Statusmeldung vorliegt, wird die Fehlermeldung in der Statuszeile mit der aktuellen Statusmeldung überschrieben. Die Fehlermeldung wird statt dessen weiter in einem Textfeld 5 angezeigt. Zusätzlich kann die Fehlermeldung auch noch in einer Datei abgespeichert werden, um es dem Benutzer oder Anwender auch nachträglich zu ermöglichen, die aufgetretenen Fehler zu überprüfen.

Das Textfeld 5 ist bevorzugt einer oder mehrerer Schaltflächen 3, 4 zugeordnet, welche sich neben der Statuszeile 2 befinden. Beispielsweise kann das Textfeld 5 eine ToolTip-Textbox sein, welche einer der Schaltflächen 3 oder 4 zugeordnet ist. Mittels der Schaltflächen 3, 4 kann ein Hilfe- und/oder Informationsprogramm der Anwendung aufgerufen werden wobei sich die Hilfe, bzw. Information auf die momentan in der Statuszeile 2 und/oder dem Textfeld 5 eingeblendeten Meldungen bezieht. Bevorzugt werden zwei Schaltflächen verwendet, wobei mit der Schaltfläche 3, welche der Statuszeile 2 am nächsten ist, Informationen aufgerufen werden, die sich auf die Fehlermeldung beziehen und wobei die andere Schaltfläche 4 eine Hilfefunktion aktiviert, welche Hilfe zur Behebung einer in der Statuszeile 2 oder der im Textfeld 5 eingeblendeten Fehlermeldung anbietet.

Im Gegensatz zu der im Stand der Technik bekannten Weise der Fehlerbehandlung wird der Programmablauf bei Anwendungen, in welche das Verfahren gemäß der Erfindung integriert ist, wie bereits oben erwähnt, der Programmablauf nicht unterbrochen. Würde beispielsweise eine fehlerhafte Datei geladen werden, die vom Programm nicht' verarbeitet werden kann, so würde lediglich eine Fehlermeldung in der Statuszeile 2 erscheinen. Der Anwender könnte also sofort, ohne eine MessageBox wegzuklicken, beispielsweise eine andere Datei laden, falls ihm als erfahrenem Anwender bewußt ist, aus welchem Grunde die vorherige Datei nicht geladen werden konnte. Ein unerfahrener Benutzer könnte dagegen durch Klicken auf eine der dem Textfeld 5 und/oder der Statuszeile 2 zugeordneten Schaltflächen 3, 4 das Hilfe- und Informationssystem aufrufen, welches ihm zum aufgetretenen Fehler weitere Informationen bereitstellt und, falls möglich, Anleitung zur Behebung des Fehlers liefert.

Des weiteren bietet das erfindungsgemäße Verfahren dem Benutzer durch die Anzeige der Fehlermeldung in der Statuszeile 2 der graphischen Benutzeroberfläche der Softwareanwendung besonders bei Anwendungen, die sich in andere Anwendungen integrieren, den Vorteil, daß der Benutzer bei jeder angezeigten Fehlermeldung genau weiß, welche der integrierten Anwendungen die Fehlermeldung angezeigt hat. Im Gegensatz dazu erlaubt die Ausgabe von Fehlermeldungen in Messageboxen nach dem Stand der Technik dem Anwender nicht, zu erkennen, welche der integrierbaren Anwendungen die Fehlermeldung in der MessageBox ausgelöst hat. Beispielsweise kann das Verfahren in eine oder mehrere Softwarekomponenten integriert sein, welche in eine übergeordnete Anwendungssoftware eingebunden sind.

Die Erzeugung und Steuerung der graphischen Benutzeroberfläche kann ebenfalls durch eine integrierte Softwarekomponente übernommen werden. Insbesondere sind für diesen Zweck ActiveX-Komponenten geeignet. Diese kommunizieren über standardisierte Softwareschnittstellen mit der übergeordneten Anwendung oder anderen Komponenten. So kann beispielsweise eine Fehlermeldung von einer beliebigen Komponente erzeugt und über die Softwareschnittstelle entsprechend an eine andere Komponente übergeben werden, welche die Ausgabe von Status- und Fehlermeldungen vornimmt, übergeben werden. Die Fehlermeldung kann dadurch auch einen Hinweis umfassen, von welcher Komponente die Fehlermeldung übergeben wurde.

## Patentansprüche

1. Verfahren zum Anzeigen von Fehlermeldungen in Softwareanwendungen, zu der eine Statuszeile erzeugt wird,
**dadurch gekennzeichnet, daß**
bei einem Fehler, der während des Ablaufs der Softwarenwendung auftritt, eine Fehlermeldung in der Statuszeile auf einer grafischen Benutzeroberfläche eingeblendet wird, wobei die Softwareanwendung weiterläuft.

2. Verfahren nach Anspruch 1, **dadurch gekennzeichnet, daß** das Verfahren in einer Softwareanwendung zur Steuerung und/oder Überwachung eines automatischen Fertigungsprozesses implementiert ist.

3. Verfahren nach Anspruch 2, welches in einer speicherprogrammierbaren Steuerung durchführbar ist.

4. Verfahren nach Anspruch 3, wobei die speicherprogrammierbare Steuerung einen Feldbus und/oder daran angeschlossene Komponenten steuert.

5. Verfahren nach einem der Ansprüche 1 bis 4, welches in einer Diagnoseeinrichtung für eine speicherprogrammierbare Steuerung implementiert ist.

6. Verfahren nach einem der Ansprüche 1 bis 5, **dadurch gekennzeichnet, daß** die Softwareanwendung auf einem 32-Bit Microsoft®-Betriebssystem, insbesondere Windows 95®, Windows 98®, Windows 2000® oder Windows NT® läuft.

7. Verfahren nach einem der Ansprüche 1 bis 6, **dadurch gekennzeichnet, daß** die Fehlermeldung in der Statuszeile durch eine nachfolgende Status- oder Fehlermeldung ersetzt wird.

8. Verfahren nach einem der Ansprüche 1 bis 7, **dadurch gekennzeichnet, daß** ein Hilfe- und/oder Informationsprogramm aufgerufen werden kann, welches Informationen über die Fehlermeldung zur Verfügung stellt.

9. Verfahren nach Anspruch 8, **dadurch gekennzeichnet, dass** das Hilfe- und/oder Informationsprogramm der Softwareanwendung mit Hilfe der Statuszeile zugeordneter Schaltflächen aufgerufen werden kann.

10. Verfahren nach einem der Ansprüche 1 bis 9, **dadurch gekennzeichnet, daß** die Fehlermeldung in zumindest einen weiteren Feld (5) angezeigt wird.

11. Verfahren nach Anspruch 9 oder 10, wobei die Fehlermeldung als ToolTip-Text (5) angezeigt wird.

12. Verfahren nach einem der Ansprüche 1 bis 11, wobei die Fehlermeldung in einer Datei gespeichert wird.

13. Verfahren nach einem der Ansprüche 1 bis 12, wobei das Verfahren in zumindest eine Softwarekomponente integriert ist und wobei die Softwareanwendung der Softwarekomponente übergeordnet ist.

14. Verfahren nach Anspruch 13, wobei die Softwarekomponente mit der übergeordneten Softwareanwendung und/oder mit weiteren Softwarekomponenten über eine Softwareschnittstelle verbunden ist.

15. Verfahren nach Anspruch 13 oder 14, wobei die Softwarekomponente eine ActiveX-Komponente umfaßt.
